# EUROPEAN PATENT APPLICATION

(11) **EP 0 811 525 A1**
(43) Date of publication of application: **10.12.1997**
(21) Application number: 97850087.4
(22) Date of filing: 06.06.1997
(51) Int. Cl.: B60P 1/00, B60P 1/64

(54) **Loading Device**

(30) Priority: 07.06.1996 SE 9602267
(71) Applicant: RKP Svenksa AB, 957 21 Övertornea (SE)
(72) Inventor: Seppälä, Teijo, 40740 Jyväskylä (FI)
(74) Representative: Rosenquist, Per Olof

(57) **Abstract**

A loading device for trucks comprising a tilting chassis (1) placed on the chassis of the truck (16) and exchangeable platform devices for pulling of exchangeable loading platforms (17) up on the tilting chassis (1) and therefrom. Further, the device comprises a sled (2), which is movable on the tilting chassis, an L-shaped arm (3) with hooks (3.1), pivotally connected to the sled and controllable with control devices, and the sled transportation means, comprising a hydraulic cylinder (4) and a block mechanism (5.5) mounted to the hydraulic cylinder with wires (5,5',6,6') for transportation of the sled over twice the distance compared to the length of the stroke of the hydraulic cylinder. The chassis of the sled (2) consists of a tubular piece, through which the cylinder (4) and the wires (6,6') are arranged to pass, whereby the height of the construction becomes very low.

## Description

### Technical field

The present invention relates to a loading device for trucks, comprising a tilting chassis adapted to the chassis of the truck, and platform exchange devices for pulling-up the exchangeable platform on the tilting chassis or for removing it therefrom, further comprising a movable sled on the tilting chassis, an L-shaped arm pivoted thereon and movable with control means having hooks and sled transportation means comprising a hydraulic cylinder and a block means mounted thereto with wires for moving of the sled twice the distance compared to the length of the working stroke of the hydraulic cylinder.

### Prior art

Normally, hook devices are used for moving exchangeable loading platforms on and off the truck. Such a hook device consists of a first arm provided with a powerful hydraulic cylinder, which arm is pivoted in the back part of the truck and is rotatable backwards. In the end of this arm there is a pivotable hook arm, which to some extent can be turned in relation to the first arm. Such a structure is rather unfavourable depending on the unfavourable direction of the compressive force at the beginning of the tilting. Because of this, many devices have to be provided with slides to give the main cylinder a lever.

The prior art which is closest to the present invention is disclosed in US-A-3,159,295 and in the PCT publication W088/06985. According to the US publication the loading platform is pulled with a wire through an auxiliary roller conveyor up on the loading platform. The energy demand is substantially less than in the pulling hook device described above. In the WO application a loading device according to the preamble is described, wherein the sled transportation device comprises two opposite hydraulic cylinders, the first of which provides for a slow, powerful movement, and the second provides a quick movement with lower power together with the block device. This solution, however, is difficult to realize.

Further, the devices contains an appreciable amount of technique which may fail, and tend to be soiled, and thus they are disadvantageous from a maintenance point of view.

### The invention

The object with the present invention is to provide a new kind of loading device, which is especially well suited for moving standard type exchangeable loading platforms and which are more simple and lighter than previous solutions. The characterizing features of the invention are evident from the appended claims. A loading device according to the invention has a comparatively low structural height, despite the fact that the construction is steady and durable.

### Short description of the drawings.

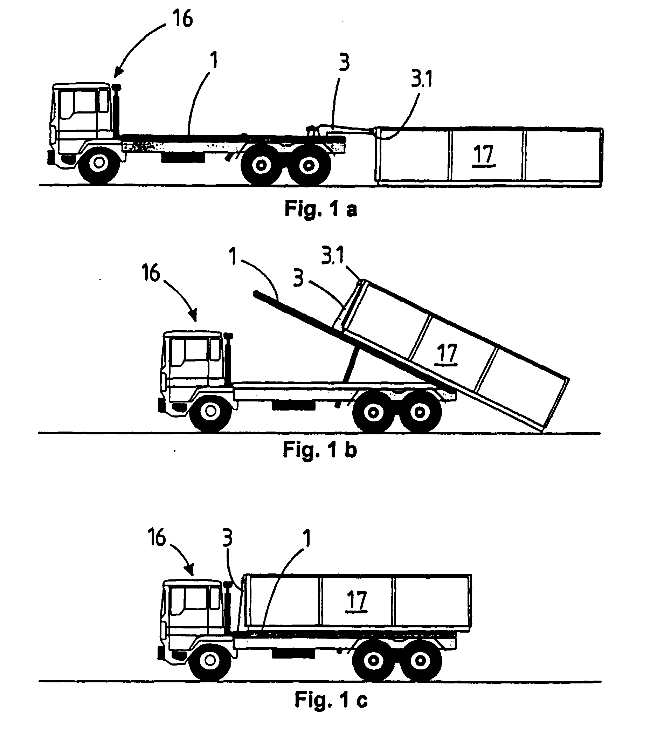

In the following description the invention is illustrated with reference to the accompanying drawings, in which
- fig. 1a-1c: illustrates the use of the loading device when lifting exchange loading platforms,
- fig. 2: illustrates the main components with the tilting chassis up-lifted and the hook rotated to a backwards position,

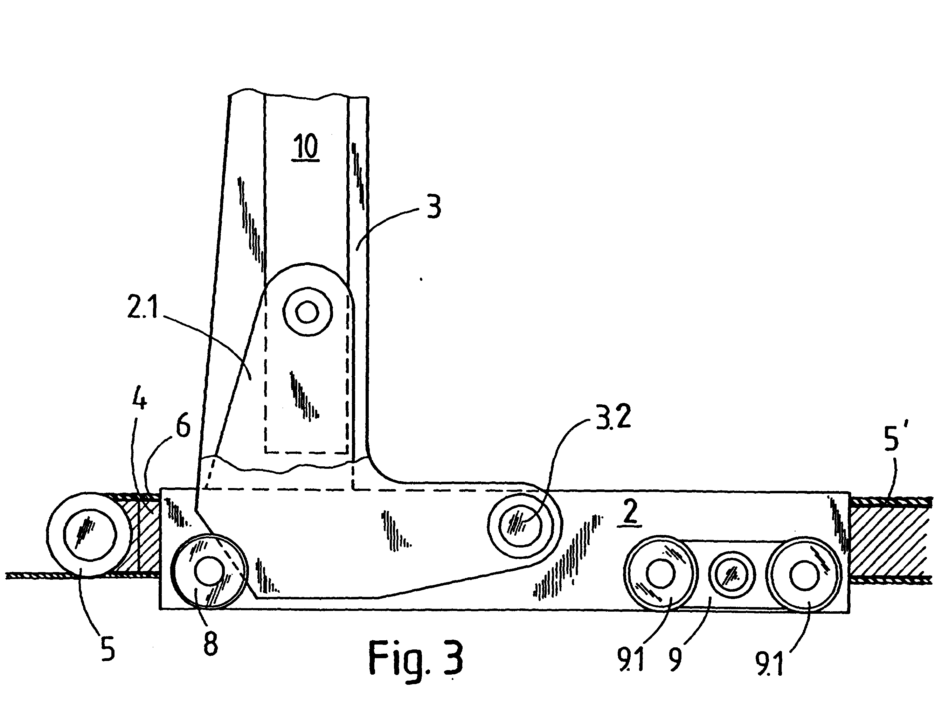

- fig. 3: shows a side view of the sled,
- fig. 4: shows the loading device from above with the sled partly in a cross-section,
- fig. 5: shows a cross-sectional front view of the loading device, and
- fig. 6: shows an additional winch mounted on the loading device.

### Detailed description of the invention

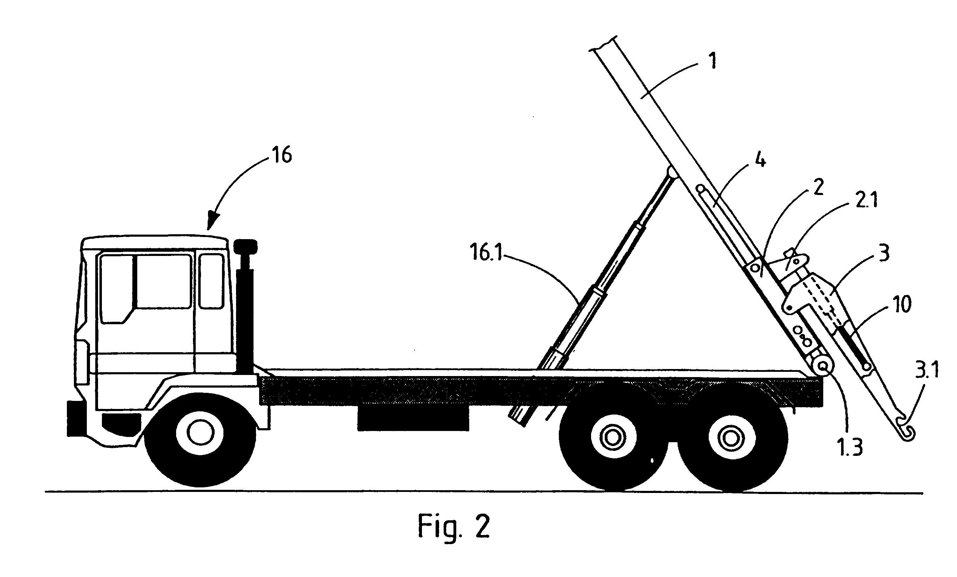

The exchangeable loading platform 17 is lifted up on the truck 16 by placing the hook arm 3 provided in the sled on the tilting chassis in a position in which the hook 3.1 catches the link of the platform. By rotating the hook arm 3 the platform 17 is brought up on the tilting chassis 1 when this is tilted, whereby, at the correct angle, the platform 17 can be pulled up linearly on the tilting chassis 1 by pulling the hook arm 3 using the sled, which is to be described later. Tipping-off of the exchangeable loading platform 17 from the truck 16 takes place in the opposite order. When necessary, the exchangeable loading platform 17 is moved linearly all the way, e.g. to a trailer or a suitable conveyor. The tilting chassis 1 according to fig. 2 is secured to the chassis of the truck 16 with the aid of the joint 1.3 and it can be tilted with the aid of the control means 16.1 to an angle of about 60°. In the tilting chassis 1 there is a sled 2 which is controlled with a hydraulic cylinder 4, and which moves in the tilting chassis 1 on a track which is described below. In the sled 2 there is an pivoted L-shaped arm 3 with the hook 3.1 at its end. The L-shaped arm 3 is controlled with the aid of the control device 10, for which mounting lugs 2.1 are provided in the sled. As is illustrated in fig. 2 the hook 3.1 can be brought far down by running the sled 2 to its back end position and tilting the tilting chassis upwards, whereby the hook is lowered to its lowest position.

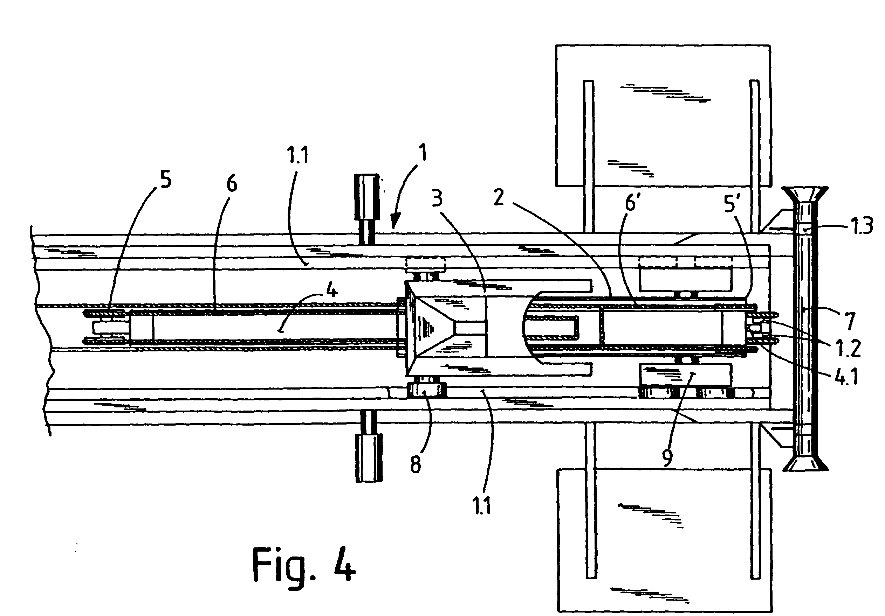

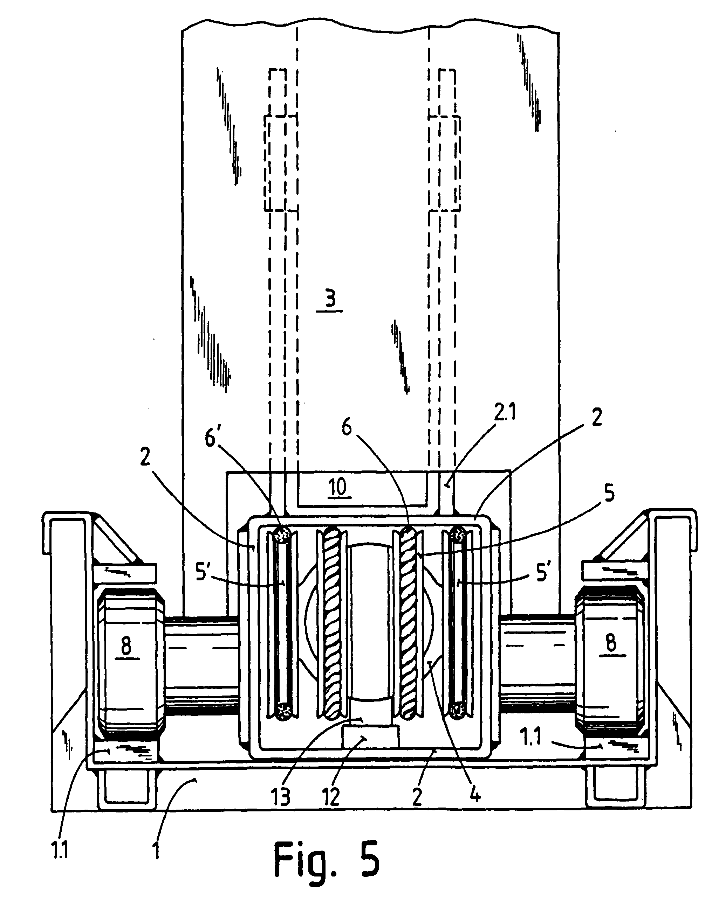

The sled 2 is a square tube with support wheels 8 and 9.1 mounted on its sides. In view of the large stress the back wheels 9.1 have been placed in bogies 9. The L-shaped hook arm 3 is forked and in its lower end it is pivotally mounted on both sides substantially in the middle of the sled with the joints 3.2. The hydraulic cylinder 4 which drives the sled and the wires are arranged to move inside the tubular sled 2. The is better illustrated in figs. 4 and 5. In fig. 4, the loading device is shown in detail. The upper side of the tubular sled 2 has been opened and inside it the hydraulic cylinder 4 is shown, the pulley wheels 5 and 5' being in the end of the cylinder. The piston rod 4.1 of the hydraulic cylinder 4 is attached to the links 1.2 in the tilting chassis 1. The sled driving wires are attached to the upper surface of the sled. In the figure the attachment points of the wires are shown. The outer wires run via the pulley wheels 5 behind the cylinder and underneath it through the sled up to the front part of the tilting chassis 1, where the other end is attached. The middle wires 6 are in the same way attached to the upper surface in the middle of the sled and they run above the cylinder via the front pulley wheels 5, underneath it and return under the cylinder and inside the sled to its attachment point behind the tilting chassis. The wires have a certain pre-tension whereby they are always tensioned. The sled 2 is placed to run on said wheels 8 and 9.1 in the track 1.1 on the tilting chassis 1. On its sides the tilting chassis have auxiliary rolls for transportation of the platform along the tilting chassis.

The cross-sectional view in fig. 5 shows the position of the cylinder 4 and the wires inside the sled 2 as well as the support of the sled against the track 1.1.

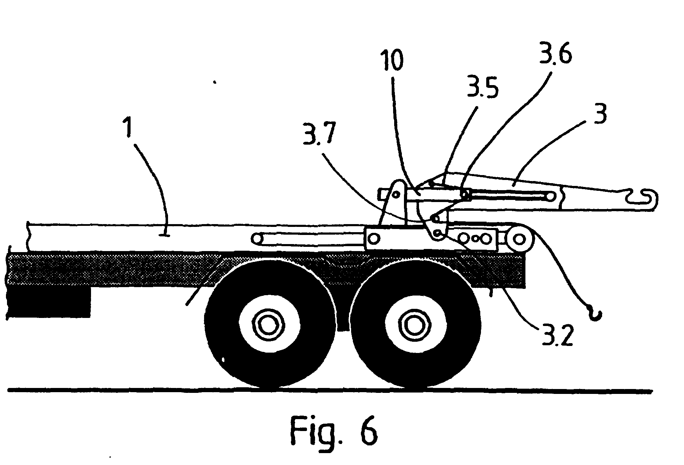

Special winch pull devices are often used in previously known hook pulling devices. In the present case the winch pulling device can be arranged quite simple, if it is realized according to fig. 6. A separate pull wire 3.5 is attached at the frame work of the L-shaped arm 3, where from it is conducted via a pulley wheel 3.6 mounted on the cylinder of the control device 10, further via a second pulley wheel 3.7 in the L-shaped arm to the pulling point. Here the pulley wheels are positioned in such a relationship that by rotation of the L-shaped arm a substantial pull length is obtained. Said pulley wheel 3.7 is advantageously positioned at a high level and far from the joint 3.2. First, the sled 2 is moved on the tilting chassis, whereby the exchangeable loading platform comes up on the tilting chassis, finally the hook rod is straightened, which pulls the exchangeable loading platform towards it.

The hydraulic hoses of the control device, which control the hook rod 3, is placed over the same type of pulley wheels as the control wires. Hereby pulley wheels for the hydraulic hoses are mounted in the shell of the hydraulic cylinder 4, whereby the hydraulic hose fed from the stationary point of the tilting platform remains straightened despite the movement of the sled.

In a loading device according to the invention many different control velocities can be used, when the feeding of the cylinder is controlled in different ways. In a loading device according to the invention a long horizontal movement is obtained, whereby the speed of the movement can be kept high. With the loading device is obtained a low installation height and light construction, since the forces run in the correct direction and no auxiliary tilt is required. Moreover the tilting chassis is always uniform and no locking of chassis which is used in many other common hook pulling devices is needed. Transportation of the platform to a trailer is possible without tilt in a horizontal direction. The large tilting angle of the hook allows the use of the above mentioned, simple wire mechanism. Because of the long horizontal transportation distance of the sled, the length of the wires becomes small.

In a loading device according to the invention, a doubled stroke length of the hydraulic cylinder is obtained in the wire mechanism, which makes possible the use of a hydraulic cylinder in this application. Transportation of the sled by motor pulling is theoretically possible, but practically substantially more complicated compared to the illustrated solution. In the system there is no pulling wheels, only pulley wheels. The wire tension is constant, when an appropriate tensioning mechanism is used. Then the system becomes such that it requires no maintenance.

## Claims

1. A loading device for trucks comprising a tilting chassis (1) placed on the chassis of the truck (16) and exchangeable platform devices for pulling of exchangeable loading platforms (17) up on the tilting chassis (1) and therefrom, further comprising a sled (2), which is movable on the tilting chassis, an L-shaped arm (3) with hooks (3.1), pivotally connected to the sled and controllable with control devices, and the sled transportation means, comprising a hydraulic cylinder and a block mechanism mounted to the hydraulic cylinder with wires for transportation of the sled over twice the distance compared to the length of the stroke of the hydraulic cylinder, **characterized in** that the sled (2) consists of a tubular piece, through which the cylinder (4) and the wires (6,6') are arranged to pass.

2. A loading device according to claim 1, **characterized in** that the sled (2) is provided with wheels (5,5') which are adapted to move along a track (1.1) formed by the tilting chassis (1), and in that at least in the back end position the sled chassis is put up against a part of the tilting chassis (1), which receives vertical load and which frees at least the wheel at the back end completely from any load.

3. A loading device according to claim 1, **characterized in** that the sled (2), at least in one end, is provided with bogie wheels (9,9.1).

4. A loading device according to any of claims 1 - 3, **characterized in** that the tilting chassis (1) consists of a stiffened U-beam, inside which the sled runs with support from both sides of the track.

5. A loading device according to any of claims 1 - 4, **characterized in** that the hydraulic hoses to the control device (10) of the hook have been led via a pulley wheel arranged in the cylinder (4), whereby they are kept stretched when the sled is moving.

6. A loading device according to any of claims 1 - 5, **characterized in** that the sled comprises support means (12,13) in order to movably support the cylinder (4).

7. A loading device according to any of claims 1 - 6, **characterized in** that at the arm (3) of the hook and at its control means (10) a winch wire has been connected so that when it is attached to the hook arm (3) it runs via the pulley wheel in the cylinder shell of the control means (10), and further to the pulling point via a second pulley wheel mounted on the hook arm (3).
